# NEUE EUROPÄISCHE PATENTSCHRIFT

(11) **EP 0 631 012 B2**
(45) Veröffentlichungstag und Bekanntmachung des Hinweises auf die Entscheidung über den Einspruch: **23.04.2003**
(45) Hinweis auf die Patenterteilung: 14.01.1998
(21) Anmeldenummer: 94105305.0
(22) Anmeldetag: 06.04.1994
(51) Int. Cl.: D21G 1/00, D21G 1/02

(54) **Verfahren und Vorrichtung zur Beeinflussung von Dicke und Glanz und/oder Glätte bei der Behandlung von Faserstoffbahnen**
Process and apparatus for adjusting the thickness, gloss and/or smoothness during the treatment of fibrous webs
Procédé et dispositif pour le réglage de l'épaisseur, la brillance et/ou le lisse pendant le traitement de bandes fibreuses

(30) Priorität: 24.06.1993 DE 4321061
(43) Veröffentlichungstag der Anmeldung: 28.12.1994
(73) Patentinhaber: Voith Paper Patent GmbH, 89522 Heidenheim (DE)
(72) Erfinder: Schneid, Josef, D-88267 Vogt (DE); Stotz, Wolf Gunter, D-88214 Ravensburg (DE)
(74) Vertreter: Thul, Stephan

(56) Entgegenhaltungen:
- EP-A- 0 132 922
- DE-A- 3 525 950
- DE-A- 3 612 207
- DE-B- 2 522 657
- DE-C- 3 131 799
- GB-A- 2 105 497
- GB-A- 2 178 509
- "Der Soft-Kompaktkalander - die Antwort auf die Herausforderung nach hohen Geschwindigkeiten bei der Glättung und Satinage", Dr.-Ing. Josef Pav und Dr.-Ing. Peter Svenka, Das Papier, Oktober 1985, S. 3-11

## Beschreibung

Die Erfindung betrifft ein Verfahren zur Beeinflussung von Dicke und Glanz und/oder Glätte bei der Behandlung einer Faserstoffbahn in mindestens einem von Walzen gebildeten Preßspalt, wobei zumindest eine der Walzen aus einer Durchbiegungseinstellwalze mit einem in der Preßkraftebene auf einer Mehrzahl von Stützelementen abgestützten flexiblen Walzenmantel besteht und die über die Breite der Faserstoffbahn vorhandene Bahndicke durch entsprechende Druckbeaufschlagung der Stützelemente korrigiert werden kann.

Ein Verfahren der eingangs genannten Art ist aus der EP-A-0 132 922 bekannt. In dieser bekannten Druckschrift ist eine Durchbiegungseinstellwaze beschrieben, bei der ein Walzenmantel durch eine Mehrzahl von unabhängig voneinander ansteuerbaren Stützelementen beaufschlagbar ist, um ein vorgebbares Preßkraftprofil in einem Preßspalt einstellen zu können.

Bei einer aus der DE-OS 36 12 207 bekannten. Vorrichtung ist eine der beiden einen Preßspalt bildenden Walzen als Durchbiegungseinstellwalze ausgebildet, bei der in üblicher Weise ein Walzenmantel durch eine Mehrzahl von Stützeinrichtungen an einem feststehenden Träger abgestützt ist. Um die Steifigkeit des Walzenmantels in Walzenachsrichtung zu verringern, sind in dem Walzenmantel axial nebeneinanderliegend eine Vielzahl von Schwächungsrillen vorgesehen.

Es ist beispielsweise bekannt, daß zur Glätte- und Glanzerhöhung von Papier selbst bei großen Linienkräften häufig der Einsatz von lokal beheizten Walzen im Glättwerk erforderlich ist. Die dabei zu beachtenden Abhängigkeiten vom Feuchtegehatt des Papiers, der Temperatur der den Preßspalt bildenden Walzen, der Anpreßkraft sowie der Verweilzeit im Preßspalt sind unter anderem in der EP 0 245 250 beschrieben.

Wechselseitige Abhängigkeiten entstehen bei den bekannten Anordnungen insbesondere dadurch, daß zur zonenweisen Beeinflussung des Dicken-Ouerprofils vorgenommene zonenweise Temperaturerhöhungen einer Walze zwar Preßkraftänderungen im Preßspalt zur Folge haben, aber gleichzeitig zur Beeinflussung des Glätte- und Glanz-Querprofils führen können.

Aufgabe der Erfindung ist es, ein Verfahren zu schaffen, das einfache und weitestgehend getrennt voneinander wirksame Beeinflussungen sowohl von Dicke als auch von Glanz und/oder Glätte ermöglicht.

Die Aufgabe wird gemäß der Erfindung dadurch gelöst, daß der Walzenmantel der Durchbiegungseinstellwalze eine so hohe Flexibilität besitzt, daß durch das Zusammenwirken der Stützelemente und den jeweils zugehörigen Abschnitten des Walzenmantels eine Vielzahl von selbständigen, sich gegenseitig zumindest im wesentlichen nicht beeinflussenden Preßkraft-Korrekturabschnitten gebildet werden, daß die über die Breite der Faserstoffbahn vorhandenen Istwerte von Glanz und/oder Glätte durch lokale, sich über wenigstens einen Temperatur-Korrekturabschnitt erstreckende Veränderungen der Oberflächentemperatur zumindest einer der beiden Walzen beeinflußt werden können, und daß, zur Entkopplung der beiden Korrekturvorgänge, die aufgrund von Änderungen der Oberflächentemperatur und damit verbundenen lokalen Durchmesserveränderungen der betreffenden Walze drohenden Preßkraftänderungen in den Korrekturabschnitten des betreffenden Preßspaltes mittels ausreichender Stützelement- und Mantelnachgiebigkeit zumindest im wesentlichen verhindert werden.

Durch die gemäß der Erfindung vorgesehenen Maßnahmen ist es möglich, einerseits die in Querrichtung der Faserstoffbahn auftretenden Dickenschwankungen und andererseits die in Querrichtung der Faserstoffbahn auftretenden Schwankungen von Glätte und/oder Glanz gezielt und zumindest steuerungstechnisch voneinandner entkoppelt zu korrigieren.

Dazu werden gemäß des erfindungsgemäßen Verfahrens voneinander weitestgehend unabhängige Preßkraft-Korrekturabschnitte geschaffen, denen hydraulische Stützelemente zugeordnet sind, die einerseits mit gleichem Druck versorgt und andererseits individuell in Abhängigkeit von Ist- und Sollwerten der Bahndicke mit unterschiedlichem Druck ansteuerbar sind. Die Flexibilität des Walzenmantels gewährleistet dabei, daß Korrekturvorgänge in einem Korrekturabschnitt, der relativ schmal gewählt werden kann, sich gegebenenfalls noch auf einen geringen Teilbereich der angrenzenden Korrekturabschnitte, aber keinesfalls mehr auf weitere Korrekturabschnitte auswirken können.

Durch die- vorgesehene individuelle Ansteuerung der hydraulischen Stützelemente in Abhängigkeit von Meßwerten des Dicken-Querprofils der Faserstoffbahn ist stets die Möglichkeit gegeben, erforderliche Dickenkorrekturen vorzunehmen.

Die steuerungstechnisch praktisch vollständige und physikalisch weitestgehende Entkopplung beider Korrekturvorgänge kann gemäß der Erfindung konsequent für ein einen Preßspalt festlegendes Walzenpaar durchgeführt werden, aber es ist auch möglich, vorgebbare und definierte wechselseitige Korrekturgrößen einzuführen, die dann gezielt für die einzelnen Korrekturabschnitte vorgegeben werden. Auf diese Weise ist es möglich, eine sich durch lokale Temperaturerhöhung ergebende Erhöhung der Bahnverformbarkeit, d.h. eine Dickenverringerung durch entsprechende Stützelementeentiastung auszugleichen, d.h. auch indirekten Effekten Rechnung zu tragen.

Von besonderer Bedeutung ist es, wenn der der Vielzahl von Stützelementen zugeordnete und somit eine entsprechend hohe Anzahlvon Korrekturabschnitten aufweisende Walzenmantel in Preßkraftrichtung nahezu keine, bzw. nur eine minimale Steifigkeit besitzt, da dann im Preßspalt unabhängig von dessen Verformung die gleiche Preßkraft herrscht, selbst wenn die diesen Walzenmantel an die Gegenwalze andrückenden Elemente mit der gleichen Druckquelie verbunden sind. Auf diese Weise haben sich aufgrund von lokaler Wärmebeaufschlagung ergebende Durchmesseränderungen der Walzen keine Auswirkung auf die Preßkraft im Preßspalt.

Durch die Schaffung einer zusätzlichen Ansteuermöglichkeit für die Vielzahl der einzelnen, vorzugsweise relativ klein ausgeführten Stützelemente ist es möglich, unter Beibehaltung der gegenseitigen prinzipiellen Entkopplung der Korrektur von Glanz- und/oder Glätte-Querprofilen Dickenkorrekturen über die Breite der Faserstoffbahn vorzunehmen.

Bevorzugt wird die Breite der einzelnen Preßkraft-Korrekturabschnitte im Bereich von etwa 25 bis 130 mm gewählt, und vorzugsweise beträgt diese Korrekturabschnittsbreite etwa 50 mm. Nach einer zweckmäßigen Ausgestaltung der Erfindung entspricht die Breite der über Individualdrücke ansteuerbaren Preßkraft-Korrekturabschnitte zumindest im wesentlichen der jeweiligen Breite der differenziert erwärm- und/oder kühlbaren Temperatur-Korrekturabschnitte, aber es ist auch möglich den Preßkraft-Korrekturabschnitten jeweils solche Temperatur-Korrektu rabschnitte zuzuordnen, die hinsichtlich ihrer Breite von den Preßkraft-Korrekturabschnitten in vorgebbarer Weise abweichen, wobei in Abhängigkeit vom jeweiligen Einsatzgebiet vorteilhafte Effekte erzielt werden können.

Als zweckmäßig erweist sich ferner, die Breite der Korrekturabschnitte an den Endbereichen der Walzen geringer zu wählen, um in diesen kritischen Bereichen besonders feinfühlige und differenzierte Korrekturen vornehmen zu können.

Weitere besonders vorteilhafte Ausgestaltungen der Erfindung sind in Unteransprüchen angegeben.

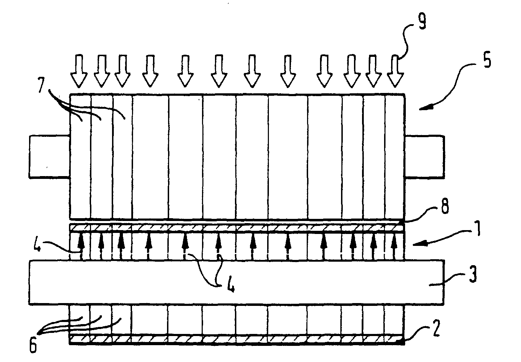

Ein Ausführungsbeispiel der Erfindung wird anhand der beigefügten Zeichnung beschrieben, deren einzige Figur in schematischer Weise eine zur Durchführung des erfindungsgemäßen Verfahrens bestimmte Vorrichtung zeigt.

Das in der Zeichnung dargestellte Walzenpaar besteht aus einer Durchbiegungseinstellwalze 1 mit einem flexiblen, elastischen, eine hohe Nachgiebigkeit besitzenden Walzenmantel 2, der bezüglich eines Querhaupts 3 über eine Vielzahl von Stützelementen 4 abgestützt ist.

Mit dieser Durchbiegungseinstellwalze 1 wirkt eine eine vergleichsweise hohe Biegesteifigkeit besitzende Gegenwalze 5 zusammen, so daß ein Preßspalt 8 gebildet wird.

Der Gegenwalze 5 ist eine Vielzahl von Heiz- und/oder Kühleinheiten zugsordnet, die schematisch mit dem Bezugszeichen 9 gekennzeichnet und über die Breite der Gegenwalze 5 verteilt angeordnet sind. Durch diese Heiz- und/oder Kühleinheiten 9 werden Temperatur-Korrekturabschnitte 7 festgelegt, deren jeweilige Oberflächentemperatur zur Beeinflußung von Glanz und/oder Glätte individuell über die Einheiten 9 vorgegeben werden kann. Auf diese Weise ist es möglich, die sich über die Breite der Faserstoffbahn einstellenden Istwerte von Glanz und/oder Glätte durch lokale Veränderung der Oberflächentemperatur zu beeinflussen.

Den Temperatur-Korrekturabschnitten 7 der Gegenwalze 5 in ihrer Ausdehnung zumindest im wesentlichen, aber nicht notwendigerweise entsprechende Preßkraft-Korrekturabschnitte 6 sind auch an der Durchbiegungseinstellwalze 1 vorgesehen, wobei diese Preßkraft-Korrekturabschnitte mit dem Bezugszeichen 6 gekennzeichnet und durch die Wirkbreite der Stützelemente 4 vorgegeben sind. Diese Stützelemente 4 bestehen vorzugsweise aus hydraulisch, pneumatisch oder ähnlichen beaufschlagbaren Stützelementen.

Über die Länge des Preßspattes 8 betrachtet, ist eine Vielzahl von Korrekturabschnitten 6, 7 vorgesehen, und die Zonenbreite der einzelnen Korrekturabschnitte liegt bevorzugt im Bereich von etwa 25 mm bis 130 mm, und sie beträgt vorzugsweise etwa 50 mm. Im Randbereich der Walzen 5, 6 wird die Zonenbreite der Korrekturabschnitte 6, 7 vorzugsweise geringer als im mittleren Bereich der Walzen 1, 5 gewählt

Die im Rahmen der Erfindung möglichen Beeinflussungen von Dicke und Glanz und/oder Glätte durch entsprechende Ansteuerung der Stützelemente 4 bzw. der Einheiten 9 zur Temperaturbeeinflussung der Korrekturabschnitte 7 wurde bereits im einzelnen erläutert und bedürfen daher keiner Wiederholung.

## Patentansprüche

1. Verfahren zur Beeinflussung von Dicke und Glanz und/oder Glätte bei der Behandlung einer Faserstoffbahn in mindestens einem von Walzen (1, 5) gebildeten Preßspalt (8), wobei zumindest eine der Walzen (1, 5) aus einer Durchbiegungseinstellwalze (1) mit einem in der Preßkraftebene auf einer Mehrzahl von Stützelementen (4) abgestützten flexiblen Walzenmantel (2) besteht, und die über die Breite der Faserstoffbahn vorhandene Bahndicke durch entsprechende Druckbeaufschlagung der Stützelemente (4) korrigiert werden kann,
**dadurch gekennzeichnet,**
**daß** der Walzenmantel (2) der Durchbiegungseinstellwalze (1) eine so hohe Flexibilität besitzt, daß durch das Zusammenwirken der Stützelemente (4) und den jeweils zugehörigen Abschnitten des Walzenmantels (2) eine Vielzahl von selbständigen, sich gegenseitig zumindest im wesentlichen nicht beeinflussenden Preßkraft-Korrekturabschnitten (6) gebildet werden,
**daß** die über die Breite der Faserstoffbahn vorhandenen Istwerte von Gianz und/oder Glätte durch lokale, sich über wenigstens einen Temperatur-Korrekturabschnitt (7) erstreckende Veränderungen der Oberflächentemperatur zumindest einer der beiden Walzen (1, 5) beeinflußt werden können, und
**daß**, zur Entkopplung der beiden Korrekturvorgänge, die aufgrund von Änderungen der Oberflächentemperatur und damit verbundenen lokalen Durchmesserveränderungen der betreffenden Walze drohenden Preßkraftänderungen in den Korrekturabschnitten des betreffenden Preßspaltes (8) mittels ausreichender Stützelement- und Mantelnachgiebigkeit zumindest im wesentlichen verhindert werden.

2. Verfahren nach Anspruch 1,
**dadurch gekennzeichnet,**
**daß** den einzelnen Preßkraft-Korrekturabschnitten (6) hydraulische Stützelemente (4) zugeordnet sind, die einerseits mit gleichem Druckversorgt und andererseits individuell in Abhängigkeit von Ist-und Sollwerten der Bahndicke mit unterschiedlichem Druck ansteuerbar sind.

3. Verfahren nach Anspruch 1 oder 2,
**dadurch gekennzeichnet,**
**daß** die Anzahl der Preßkraft-Korrekturabschnitte (6) zumindest im wesentlichen gleich der Anzahl der aneinandergrenzend auf zumindest einer der Walzen (1, 5) vorgesehenen, differenziert erwärmund/oder kühlbaren Temperatur-Korrekturabschnitte (7) gewählt wird.

4. Verfahren nach einem der vorhergehenden Ansprüche,
**dadurch gekennzeichnet,**
**daß** die beiden Korrekturvorgänge einander überlagert in Abhängigkeit von Dickenmeßwerten einerseits und Glätteund/oder Glanzmeßwerten andererseits durchgeführt werden.

5. Verfahren nach einem dervorhergehenden Ansprüche,
**dadurch gekennzeichnet,**
**daß** einerseits das Glätte- und/oder Glanzquerprofil und andererseits das Dickenquerprofil der Faserstoffbahn gemessen und jeweils mit vorgebbaren Sollwerten verglichen wird, und daß die voneinander steuerungstechnisch entkoppelte Beeinflussung der jeweiligen Korrekturabschnitte (6, 7) hinsichtlich Temperatur und hydraulischem Stützelementendruck in Abhängigkeit von der jeweiligen Soll-lstwert-Differenz erfolgt.

6. Verfahren nach einem dervorhergehenden Ansprüche,
**dadurch gekennzeichnet,**
**daß** eine der beiden den Preßspalt (8) bildenden Walzen (1, 5) abschnittsweise beheiz- und/oder kühlbar ausgeführt wird und die Preßkraft-Korrekturabschnitte (6) an der anderen Walze vorgesehen werden.

7. Verfahren nach einem dervorhergehenden Ansprüche,
**dadurch gekennzeichnet,**
**daß** die Flexibilität des Walzenmantels (2) der die Preßkraft-Korrekturabschnitte (6) aufweisenden Walze (1) so gewählt wird, daß Durchmesseränderungen einer der Walzen (1, 5) infolge von lokalen Temperaturveränderungen im wesentlichen ohne Einfluß auf die von der allen Stützelementen (4) gemeinsamen Konstantdruckquelle ausgehenden Preßkraft im Preßspalt (8) sind.

8. Verfahren nach einem der vorhergehenden Ansprüche,
**dadurch gekennzeichnet,**
**daß** die lokale Beheizung zumindest einer Walze (5) von innen und/oder außen erfolgt.

9. Verfahren nach einem der vorhergehenden Ansprüche,
**dadurch gekennzeichnet,**
**daß** die Erfassung der Istwerte für Glanz und Glätte und der Dicke in Bahnlaufrichtung nach dem Preßspalt (8) erfolgt.

10. Verfahren nach einem der vorhergehenden Ansprüche,
**dadurch gekennzeichnet,**
**daß** zumindest die dem Glanz und/oder der Glätte entsprechenden Istwerte in vorgebbarer Weise zur den Korrekturabschnitten entsprechenden Ansteuerung einer vor dem Preßspalt (8) vorgesehenen Befeuchtungseinheit für die Faserstoffbahn verwendbar sind.

11. Verfahren nach einem der vorhergehenden Ansprüche,
**dadurch gekennzeichnet,**
**daß** die getrennt erfaßten Istwerte für Glanz und Glätte einerseits und Dicke andererseits vor ihrer Verwendung als Steuergrößen wechselseitig über Korrekturglieder in vorgebbarer Weise modifizierbar sind.

## Claims

1. Method of influencing the thickness and gloss and/or smoothness during the treatment of a fibre material web in at least one press gap (8) formed by rolls (1, 5), wherein at least one of the rolls (1, 5) comprises a deflection controlled roll (1) with a flexible roll jacket (2) supported in the plane of the pressing force on a plurality of support elements (4), and wherein the web thickness present over the width of the fibre material web can be corrected by corresponding pressure loading of the support elements (4), **characterised in that** the roll jacket (2) of the deflection controlled roll (1) has a flexibility which is so high that, through the co-operation of the support elements (4) and the respectively associated sections of the roll jacket (2), a plurality of independent pressing force correction sections (6) are formed, which at least substantially do not mutually influence each other;
**in that** the actual values of gloss and/or smoothness present over the width of the fibre material web can be influenced by local changes of the surface temperature of at least one of the two rolls (1, 5);
and **in that**, for the decoupling of the two correction processes, the changes in the pressing force which threaten as a result of changes of the surface temperature and the associated local changes in diameter of the relevant roll are at least substantially prevented in the correction sections of the relevant press gap (8) by means of adequate support element and jacket resilience.

2. Method in accordance with claim 1, **characterised in that** hydraulic support elements (4) are associated with the individual pressing force correction sections (6) and are, on the one hand, supplied with the same pressure and, on the other hand, are individually controllable with different pressure in dependence on the actual and desired values of the web thickness.

3. Method in accordance with claim 1 or claim 2, **characterised in that** the number of the pressing force correction sections (6) is selected to be at least substantially the same as the number of adjacent differentially heatable and/or coolable temperature correction sections (7) provided on at least one of the rolls (1, 5).

4. Method in accordance with one of the preceding claims, **characterised in that** the two correction processes are superimposed on one another in dependence on the measured thickness values, on the one hand, and the measured values of gloss and/or smoothness, on the other hand.

5. Method in accordance with one of the preceding claims, **characterised in that**, on the one hand, the transverse smoothness and/or gloss profile and, on the other hand, the transverse thickness profile of the fibre material web are measured and are compared in each case with predeterminable desired values; and **in that** the mutually decoupled influencing from a technical control viewpoint of the respective correction sections (6, 7) with respect to temperature and hydraulic support element pressure takes place in dependence on the respective difference in the desired and actual values.

6. Method in accordance with one of the preceding claims, **characterised in that** one of the rolls (1, 5) forming the press gap (8) is made in such a way that it can be sectionally heated and/or cooled and the pressing force correction sections (6) are provided at the other roll.

7. Method in accordance with one of the preceding claims, **characterised in that** the flexibility of the roll jacket (2) of the roll (1) having the pressing force correction section (6) is so selected that the diameter changes of one of the rolls (1, 5) in consequence of local temperature changes are substantially without influence on the pressing force in the pressing gap (8) resulting from the constant pressure source common to all the support elements (4).

8. Method in accordance with one of the preceding claims, **characterised in that** the local heating of at least one roll (5) takes place from the inside and/or from the outside.

9. Method in accordance with one of the preceding claims, **characterised in that** the detection of the actual values for gloss and smoothness and of the thickness in the direction of movement of the web takes place after the press gap (8).

10. Method in accordance with one of the preceding claims, **characterised in that** at least the actual values corresponding to the gloss and/or to the smoothness can be used in a predeterminable manner for the control of a moisturising unit for the fibre material web provided upstream of the press gap (8) in correspondence with the correction sections.

11. Method in accordance with one of the preceding claims, **characterised in that** the separately detected actual values for gloss and smoothness, on the one hand, and for thickness, on the other hand, can be mutually modified via correction elements in a predeterminable manner prior to their use as control parameters.

## Revendications

1. Procédé pour influencer l'épaisseur et la brillance et/ou le lissé pendant le traitement d'une bande fibreuse dans au moins un intervalle de pressage (8) formé par des cylindres (1, 5), dans lequel l'un au moins des cylindres (1, 5) est constitué par un cylindre de réglage fléchissant (1) comportant une enveloppe de cylindre flexible (2) appuyée dans le plan de force de pressage sur une pluralité d'éléments d'appui (4), et dans lequel l'épaisseur de bande existant sur la largeur de la bande fibreuse peut être corrigée par une sollicitation correspondante en pression des éléments d'appui (4), **caractérisé en ce que** l'enveloppe (2) du cylindre de réglage fléchissant (1) présente une flexibilité si élevée qu'il se forme, grâce à la coopération des éléments d'appui (4) et des secteurs respectivement associés de l'enveloppe de cylindre (2), une multitude de secteurs de correction de force de pressage autonomes (6) qui ne s'influencent du moins pas sensiblement les uns les autres, **en ce que** les valeurs réelles de la brillance et/ou du lissé existant sur la largeur de la bande fibreuse peuvent être influencées par des modifications locales de la température de surface de l'un au moins des deux cylindres (1, 5), modifications qui s'étendent au moins sur un secteur de correction de température (7), et **en ce que**, pour découpler les deux opérations de correction, les modifications de force de pressage dans les secteurs de correction de l'intervalle de pressage correspondant (8), modifications qui risquent d'apparaître à cause des modifications de la température de surface et des modifications locales du diamètre du cylindre correspondant qui sont liées à celles-ci, sont au moins sensiblement empêchées par l'intermédiaire d'une élasticité suffisante des éléments d'appui et de l'enveloppe.

2. Procédé selon la revendication 1, **caractérisé en ce qu'**on associe aux secteurs de correction de force de pressage individuels (6) des éléments d'appui hydrauliques (4) qui sont alimentés d'une part sous la même pression et qui peuvent d'autre part être pilotés individuellement avec une pression différente en dépendance des valeurs réelles et des valeurs de consigne de l'épaisseur de bande.

3. Procédé selon l'une ou l'autre des revendications 1 et 2, **caractérisé en ce que** le nombre des secteurs de correction de force de pressage (6) est choisi du moins sensiblement égal au nombre des secteurs de correction de température (7) qui sont prévus au voisinage mutuel sur l'un au moins des cylindres (1, 5) et qui sont susceptibles d'être réchauffés et/ou refroidis différemment.

4. Procédé selon l'une quelconque des revendications précédentes, **caractérisé en ce que** les deux opérations de correction sont effectuées de façon superposée en dépendance des valeurs mesurées de l'épaisseur d'une part et en dépendance des valeurs mesurées du lissé et/ou de la brillance d'autre part.

5. Procédé selon l'une quelconque des revendications précédentes, **caractérisé en ce que** l'on mesure d'une part le profil transversal du lissé et/ou de la brillance et d'autre part le profil transversal de l'épaisseur de la bande fibreuse et on les compare respectivement avec des valeurs de consigne prédéterminées, et **en ce que** l'on procède à l'influence découplée sur le plan de la commande des secteurs de correction respectifs (6, 7) quant à la température et à la pression de l'élément d'appui hydraulique, en dépendance de la différence respective entre la valeur de consigne et la valeur réelle.

6. Procédé selon l'une quelconque des revendications précédentes, **caractérisé en ce que** l'un des deux cylindres (1, 5) formant l'intervalle de pressage (8) est réalisé de manière à pouvoir être réchauffé et/ou refroidi par secteurs et **en ce que** les secteurs de correction de force de pressage (6) sont prévus sur l'autre cylindre.

7. Procédé selon l'une quelconque des revendications précédentes, **caractérisé en ce que** la flexibilité de l'enveloppe (2) du cylindre (1) présentant les secteurs de correction de force de pressage (6) est choisie de telle sorte que des modifications en diamètre de l'un des cylindres (1, 5), dues à des modifications locales de la température, sont sensiblement sans influence sur la force de pressage dans l'intervalle de pressage (8), qui émane de la source de pression constante commune à tous les éléments d'appui (4).

8. Procédé selon l'une quelconque des revendications précédentes, **caractérisé en ce que** le réchauffement local de l'un au moins des cylindres (5) s'effectue depuis l'intérieur et/ou depuis l'extérieur.

9. Procédé selon l'une quelconque des revendications précédentes, **caractérisé en ce que** la détection des valeurs réelles pour la brillance et pour le lissé, et la détection de l'épaisseur, s'effectuent en direction de circulation de bande après l'intervalle de pressage (8).

10. Procédé selon l'une quelconque des revendications précédentes, **caractérisé en ce que** du moins les valeurs réelles correspondantes à la brillance et/ou au lissé peuvent être utilisées de façon prédéterminée pour la commande correspondante aux secteurs de correction d'une unité d'humidification prévue en avant de l'intervalle de pressage (8) pour la bande fibreuse.

11. Procédé selon l'une quelconque des revendications précédentes, **caractérisé en ce que** les valeurs réelles détectées séparément pour la brillance et le lissé d'une part et pour l'épaisseur d'autre part sont susceptibles d'être modifiées de façon prédéterminée réciproquement via des organes de correction, avant leur utilisation en tant que grandeur de commande.
